# EUROPÄISCHE PATENTSCHRIFT

(11) **EP 2 132 393 B1**
(45) Veröffentlichungstag und Bekanntmachung des Hinweises auf die Patenterteilung: **05.04.2017**
(21) Anmeldenummer: 08706360.8
(22) Anmeldetag: 14.02.2008
(51) Int. Cl.: E06B 3/54, E06B 5/16

(54) **BRANDSCHUTZVERBUNDGLAS FÜR BAUELEMENTE WIE TÜREN, WÄNDE ODER FENSTER**
FIRE-PROTECTION COMPOSITE GLASS FOR CONSTRUCTION ELEMENTS SUCH AS DOORS, WALLS, OR WINDOWS
VERRE DE SÉCURITÉ FEUILLETÉ ANTI-FEU POUR DES ÉLÉMENTS DE CONSTRUCTION COMME DES PORTES, MURS OU FENÊTRES

(30) Priorität: 15.03.2007 CH 417072007
(43) Veröffentlichungstag der Anmeldung: 16.12.2009
(73) Patentinhaber: Vetrotech Saint-Gobain (International) AG, 3000 Bern 22 (CH)
(72) Erfinder: MÖLLERS, Manfred, Christian, 33104 Paderborn (DE); CREMERIUS, Hubert, 52224 Stolberg (DE); STRÜVER, Uwe, 52146 Würselen (DE); LINDEN, Ralf, 52074 Aachen (DE)
(74) Vertreter: Frei Patent Attorneys
(86) Internationale Anmeldenummer: PCT/CH2008/000060
(87) Internationale Veröffentlichungsnummer: WO 2008/110021

(56) Entgegenhaltungen:
- EP-A1- 0 506 522
- EP-A1- 0 590 978
- DE-U1- 9 318 862

## Beschreibung

Die Erfindung betrifft ein Brandschutzverbundglas für Bauelemente wie Türen, Wände oder Fenster, welches Durchbrüche für Verbindungselemente zu Anbauelementen, insbesondere Beschläge, Halterungen oder Schlosskasten aufweist, mit mindestens zwei voneinander beabstandeten Glasscheiben und einer im Zwischenraum zwischen den Glasscheiben angeordneten Brandschutzschicht sowie ein Verfahren zur Herstellung eines derartigen Brandschutzverbundglases.

Die Verwendung von Brandschutzverglasungen als lichtdurchlässige Bauelemente wie zum Beispiel für Türen, Wände oder Fenster ist allgemein bekannt. Um den Anforderungen der heutigen Architektur genügen zu können, werden derartige Bauelemente sehr häufig rahmenlos ausgeführt. Dies erfordert aber bei Brandschutzverglasungen; welche mehrschichtig als Brandschutzverbundglas ausgebildet sind, spezielle Massnahmen, um derartige Brandschutzverbundgläser an Halterungen befestigen zu können oder um Beschläge, wie beispielsweise Scharnierbänder oder Schlosskasten anbringen zu können.

Aus DE-A1 41 23 977 ist ein derartiges Bauelement aus einem Mehrschichten-Brandschutzglas, d.h. einem Brandschutzverbundglas, insbesondere zur Verwendung für rahmenlose Türen, bekannt. Das Brandschutzverbundglas besteht dabei aus drei Glasscheiben, wobei die mittlere der Glasscheiben gehärtet sein kann. Zwischen den Glasscheiben ist eine Brandschutzschicht angeordnet, wobei es sich um dünne Schichten handelt, welche durch Aufgiessen und Trocknen auf eine der Oberflächen der Glasscheiben aufgebracht werden. Um Anbauelemente, z.B. Beschläge oder Halterungen, an diesem Brandschutzverbundglas anzubringen, werden im Bereiche der entsprechenden Verbindungselemente die beiden äusseren Glasscheiben weggeschnitten und in diesem Bereich befinden sich keine Brandschutzschichten. In der mittleren Glasscheibe befinden sich dann Durchbrüche für Schrauben, welche beidseits der mittleren Glasscheibe angeordnete Spannplatten miteinander verbinden. Diese Spannplatten dienen als Verbindungselemente zu Scharnierbändern oder anderen Befestigungsmitteln. Wegen der fehlenden Brandschutzschichten im Bereiche der Verbindungselemente wird das Brandschutzverbundglas in diesen Bereichen erheblich geschwächt und der Widerstand im Brandfalle reduziert.

DE-A1 43 40 690 offenbart eine weitere Lösung für ein Bauelement aus einem Brandschutzverbundglas wie es oben beschrieben wurde. Auch dieses Brandschutzverbundglas ist rahmenlos und alle drei Glasscheiben sowie die Brandschutzzwischenschichten werden auch im Bereiche der Verbindungselemente bis zum Rand geführt. Bei dieser Lösung sind durch das ganze Brandschutzverbundglas, d.h. durch alle drei Glasscheiben und die Brandschutzschichten Durchbrüche in der Form von Durchgangsöffnungen zum Anbringen von Befestigungen vorhanden. Durch diese Durchgangsöffnungen werden Stützteile gesteckt und beidseits des Brandschutzverbundglases mit Befestigungsplatten verbunden. Die Stützteile werden mit einer Kunstharzmasse in die Durchgangsöffnungen eingegossen, wobei die Haltekraft von den Glasscheiben über diese Stützteile in den Durchbrüchen auf die Befestigungsplatten übertragen wird. Auf das Brandschutzverbundglas wird durch die Befestigungsplatten keine oder höchstens eine ganz geringfügige Klemmkraft ausgeübt, da andernfalls die Brandschutzschichten zusammengepresst und beschädigt würden. Da Brandschutzverbundgläser über die Fläche Abweichungen von der Solldicke aufweisen können, besteht die Gefahr, dass zwischen den Befestigungsplatten und den Aussenflächen des Brandschutzverbundglases ein Zwischenraum entsteht oder das Brandschutzverbundglas zu stark zusammengepresst wird. Insbesondere bei Verwendung von im Brandfalle aufschäumenden Brandschutzschichten besteht bei dieser Lösung die Gefahr, dass die Brandschutzschichten durch Kontakt mit Luft beschädigt werden, weil sie feuchtigkeitsempfindlich sind oder chemisch reagieren können. Die beschriebene Lösung kann nur bei Brandschutzverbundgläsern verwendet werden, bei welchen die Brandschutzschicht vor dem Zusammenbau auf eine Oberfläche einer Glasscheibe aufgebracht und durch Trocknen verfestigt wird. Bei Brandschutzschichten, welche erst nach dem Zusammenbau des Brandschutzverbundglases in den Zwischenraum zwischen zwei Glasscheiben eingegossen und dann im Zwischenraum ausgehärtet werden, zum Beispiel wie in EP-B1 620 781 beschrieben, kann diese Lösung nicht angewendet werden.

DE 93 18 862 zeigt ein Brandschutzverbundglass nach dem Oberbegriff des Anspruchs 1.

Es ist Aufgabe der Erfindung, ein Brandschutzverbundglas für Bauelemente der eingangs beschriebenen Art, welches Durchbrüche für Verbindungselemente aufweist, zu schaffen, bei welchem auch Brandschutzverbundgläser mit eingegossener Brandschutzschicht einsetzbar sind, die Brandschutzschicht auch vor dem; Anbringen der Verbindungselemente im Bereiche der Durchbrüche gegen Kontakt mit der Umgebungsluft geschützt ist, im Bereiche der Durchbrüche keine Druckkräfte, welche auf die Aussenflächen des Brandschutzverbundglases wirken, auf die Brandschutzschicht übertragen werden und bei welchem auch bei Abweichungen der Dicke des Brandschutzverbundglases vom Sollwert das Anliegen von Spannplatten an den Aussenflächen des Brandschutzverbundglases gewährleistet ist. Des Weiteren soll ein Verfahren zur Herstellung eines derartigen Brandschutzverbundglases angegeben werden.

Diese Aufgabe wird in Verbindung mit dem Oberbegriff des Patentanspruches 1 erfindungsgemäss durch die kennzeichnenden Merkmale des Patentanspruches 1 gelöst. Verfahrensgemäss wird die Aufgabe gemäss den Merkmalen des Patentanspruches 11 gelöst. Vorteilhafte Weiterbildungen der Erfindung ergeben sich nach den Merkmalen der abhängigen Patentansprüche.

Das erfindungsgemässe Brandschutzverbundglas weist im Zwischenraum zwischen zwei Glasscheiben und im Bereiche jedes Durchbruches durch diese Glasscheiben und die Brandschutzschicht eine Hülse auf. Diese Hülse umschliesst den Durchbruch mantelförmig. Die Stirnflächen der Hülse, welche rechtwinklig zur Längsachse des Durchbruches stehen, liegen an den Innenflächen der beiden Glasscheiben an, wodurch die Brandschutzschicht durch die Hülse vom Durchbruch getrennt ist. Als Material für die Hülse sind an sich bekannte chemisch inerte Materialien wie Glas, Keramik oder Kunststoff, z.B. Polypropylen geeignet. Diese Anordnung erbringt den Vorteil, dass das Verbundglas vor dem Einbringen der Masse, welche die Brandschutzschicht bildet, zusammengebaut werden kann und der Zwischenraum zwischen den Glasscheiben im Bereiche der Durchbrüche trotzdem verschlossen ist. Die Hülsen wirken gleichzeitig als Distanzhalter und Kraftaufnahmemittel im Bereiche der Durchbrüche und verhindern, dass die beiden Glasscheiben im Bereiche der Durchbrüche gegeneinander gedrückt werden können. Dadurch wird sichergestellt, dass im Bereiche der Durchbrüche auch die Brandschutzschicht nicht zusammen gedrückt wird, wenn in Richtung der Längsachse eines Durchbruches Druck- bzw. Klemmkräfte aufgebracht werden.

Erfindungsgemäss sind im Bereiche des Durchbruches an den Aussenflächen des Brandschutzverbundglases Spannplatten angeordnet, welche Verbindungselemente zu Anbauelementen, wie zum Beispiel Scharnierbänder oder andere Befestigungselemente bilden. Diese Spannplatten sind über eine Spannverbindung, z.B. ein Gewindebolzen, welcher sich durch den Durchbruch erstreckt, miteinander verbunden und werden damit gegeneinander gespannt. Die Verbindung zwischen den beiden Verbindungselementen, bzw. Spannplatten und dem Brandschutzverbundglas ist im Wesentlichen kraftschlüssig und erfolgt über den Flächenkontakt. Durch diese Anordnung kann auf Kraftübertragungselemente, welche das Brandschutzglas selbst halten, innerhalb des Durchbruches verzichtet werden. Dadurch wird auch die Gefahr von Beschädigungen der Glaskanten an den Glasscheiben im Durchbruch vermindert, da diese nicht an kraftübertragenden Elementen anliegen. Zwischen den Aussenflächen des Brandschutzverbundglases und den beiden Verbindungselementen, bzw. Spannplatten ist je eine Zwischenschicht aus einem brandschutztechnisch geeignetem Material angeordnet. Bekannte geeignete Materialien sind beispielsweise keramische Bänder, Silikon, Chloropren oder Polyoxymethylen. Diese Zwischenschicht verhindert, dass bei Spannplatten, welche normalerweise aus Metall gebildet sind, unerwünschte Druckpunkte auftreten und da Metall Wärme besser leitet als die Glasscheiben, im Brandfall eine unerwünschte Wärmeübertragung auf die Glasscheiben erfolgt. Um die lagegerechte Anordnung der Verbindungselemente in Bezug auf die Durchbrüche zu gewähneisten, sind beispielweise an den Verbindungselementen an sich bekannte, sich in den Durchbruch erstreckende Positionierelemente, angeordnet.

Bevorzugt weist die Hülse quer zur Längsachse des Durchbruches Innenabmessungen auf, welche grösser sind als die Innenabmessungen des Durchbruches in den Glasscheiben. Dadurch entsteht zwischen den Glasscheiben und entlang des Innenmantels der Hülse ein Ringraum, welcher in vorteilhafter Weise durch eine Dichtungsmasse ausgefüllt ist, welche eine mantelförmige Dichtung bildet. Diese Dichtungsmasse kann vor oder nach dem Eingiessen der Masse für die Brandschutzschicht in den Zwischenraum zwischen den Glasscheiben angebracht werden. Wenn sie vor dem Eingiessen angebracht wird, ergibt sich ein zusätzlicher Sicherheitsfaktor, so dass die Brandschutzschicht im Bereiche der Durchbrüche absolut keinen schädlichen Umwelteinflüssen ausgesetzt ist. Geeignete Materialien für diese Dichtungsmasse sind beispielsweise Polyurethane, Silikone und/ oder Polysulfid. Die Dichtung kann dabei ein- oder mehrschichtig ausgebildet sein.

Es ist auch vorteilhaft, wenn mindestens zwischen der inneren Fläche einer der Glasscheiben und der an dieser inneren Fläche anliegenden Stirnfläche der Hülse ein Klebstoff angebracht ist. Dies erleichtert das Anbringen der Hülse an einer der Glasscheiben vor dem Zusammenbauen der beiden Glasscheiben und gewährleistet, dass die Hülse in der richtigen Position um den Durchbruch angeordnet ist.

Als Klebstoff kann die gleiche Klebermasse verwendet werden, wie sie für den Abstandhalter im Randbereich des Brandschutzverbundglases eingesetzt wird, beispielsweise ein Butyl-Polymer. Die Verwendung von Klebermassen, z.B. aus einem Butyl-Polymer, für Abstandhalter, welche entlang des Randes des Brandschutzverbundglases zwischen den Glasscheiben angeordnet sind, ist besonders vorteilhaft. Das Anbringen derartiger Abstandhalter ist an sich bekannt und wird in EP-B1 1 179 113 beschrieben.

Der Querschnitt der Durchbrüche kann grundsätzlich beliebig gestaltet werden. Es ist jedoch vorteilhaft, wenn der Querschnitt des Durchbruches, quer zur Längsachse, kreisringförmig, oval oder mehreckig ist. Durch diese symmetrische Ausgestaltung des Querschnitts des Durchbruches durch die Glasscheiben ergibt sich im Brandfall eine gleichmässigere Verteilung der Wärmespannungen im Bereiche der Durchbrüche.

Eine vorteilhafte Ausbildung des Erfindungsgegenstandes sieht vor, dass eine der Glasscheiben mindestens in einer Richtung der Fläche grössere Abmessungen aufweist als die andere Glasscheibe. Dadurch wird auf mindestens einer Seite am Brandschutzverbundglas ein Übermass gebildet und die grössere Glasscheibe bildet einen Randvorsprung. Diese Anordnung ermöglicht beispielsweise bei stirnseitig aneinander stossenden Wandelementen eine Überlappung der Randbereiche oder bei dicken Türen, welche eine zusätzliche, vom Brandschutzverbundglas beabstandete Glasscheibe aufweist, die Anordnung eines verdeckten Rahmenelementes.

Es ist auch vorteilhaft, wenn mindestens eine der Glasscheiben des Brandschutzverbundglases gehärtet ist. Dies ist insbesondere dann vorteilhaft, wenn erhöhte Anforderungen an die Bruchsicherheit des Bauelementes gestellt werden und/oder wenn die Widerständszeiten im Brandfall verbessert werden sollen. Wesentlich für die Brandschutzsicherheit ist die Brandschutzschicht, welche in an sich bekannter Weise im Brandfall aufschäumt und trübe wird und dadurch eine wirksame Dämmschicht gegen Wärmestrahlung bildet.

Das Verfahren zur Herstellung eines Brandschutzverbundglases der erfindungsgemässen Art weist den Vorteil auf, dass damit auch Brandschutzverbundgläser, welche durch Eingiessen einer fliessfähigen Brandschutzmasse in den Zwischenraum zwischen zwei Glasscheiben und anschliessendes Aushärten dieser Masse zu einer Brandschutzschicht hergestellt werden, mit Durchbrüchen versehen werden können und damit Verbindungselemente für Anbauelemente direkt am Brandschutzverbundglas angebracht werden können. Dazu werden an mindestens zwei Glasscheiben zuerst an den gewünschten Positionen Durchbrüche mit den gewünschten Querschnittsformen angebracht. Anschliessend wird auf eine erste der Glasscheiben entlang des Randbereiches der rahmenförmige Abstandhalter aufgebracht und im Bereiche der und um die Durchbrüche dieser Glasscheibe werden die Hülsen angeordnet, z.B. aufgeklebt. Nun wird die zweite Glasscheibe in der richtigen Position mit der ersten Glasscheibe zusammengebracht und in bekannter Weise der Abstandhalter auf die gewünschte Dicke zusammengepresst. Sobald der Abstandhalter die erforderliche Festigkeit erreicht hat, wird der Zwischenraum zwischen den beiden Glasscheiben mit einer giessfähigen Masse gefüllt, wobei diese Masse nach dem Eingiessen aushärtet und die Brandschutzschicht zwischen den beiden Glasscheiben bildet. Derartige giessfähige Massen, welche durch Aushärten eine Brandschutzschicht bilden, sind beispielsweise gemäss EP-B1 620 781 bekannt und beschrieben. In vorteilhafter Weise wird vor oder nach dem Eingiessen und Aushärten der Brandschutzschicht in den Zwischenraum zwischen den Glasscheiben, in die Durchbrüche und entlang des Innenmantels der Hülsen, eine Dichtungsmasse eingebracht. Diese Dichtungsmasse dient dazu, das Eindringen von Umgebungsluft oder anderen Störelementen in die Brandschutzschicht im Bereiche der Hülsen zu verhindern. Da die Brandschutzschicht zwischen den beiden Glasscheiben im Randbereich mittels des Abstandhalters und allfälliger zusätzlicher Dichtungsmassen und im Bereiche der Durchbrüche mittels der Hülsen und der zusätzlichen Dichtungsmasse gegen Umwelteinflüsse abgeschirmt und geschützt ist, können die erfindungsgemässen Brandschutzverbundgläser mit Durchbrüchen bis zur Verwendung problemlos gelagert werden. Die Verbindungselemente müssen nicht in die Durchbrüche eingebracht werden, um den Schutz der Brandschutzschicht gegen Umwelteinflüsse zu gewährleisten. Es müssen auch keine anderweitigen Schutzmassnahmen der Durchbrüche ergriffen werden.

Im Folgenden wird die Erfindung anhand von Ausführungsbeispielen unter Bezugnahme auf die beiliegenden Zeichnungen näher erläutert. Es zeigen:
- Fig. 1: Ansicht eines erfindungsgemässen Brandschutzverbundglases mit Durchbrüchen,
- Fig. 2: einen Teilschnitt durch ein Brandschutzverbundglas gemäss Fig. 1 mit einem Verbindungselement, und
- Fig. 3: einen Teilschnitt durch den Randbereich eines Brandschutzverbundglases mit unterschiedlich grossen Glasscheiben.

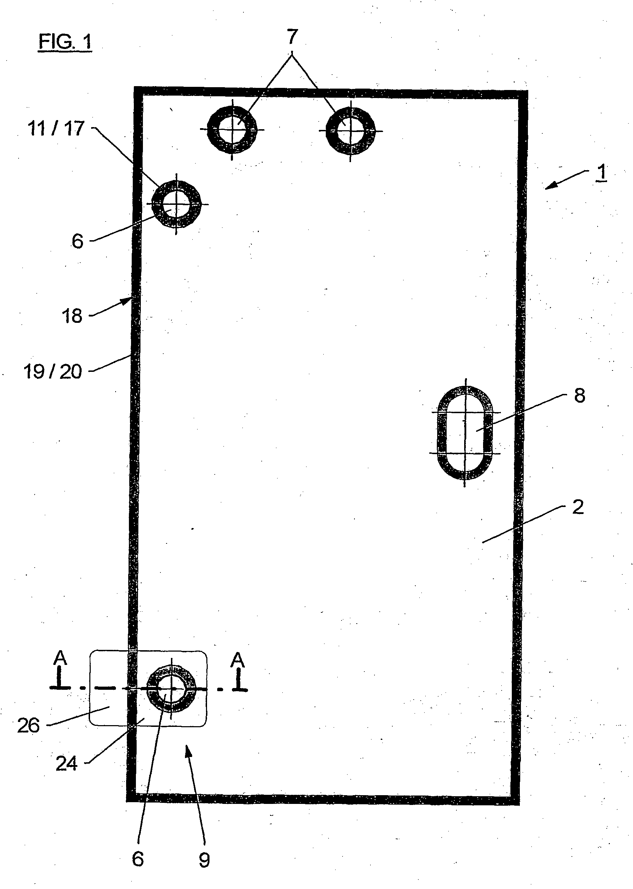

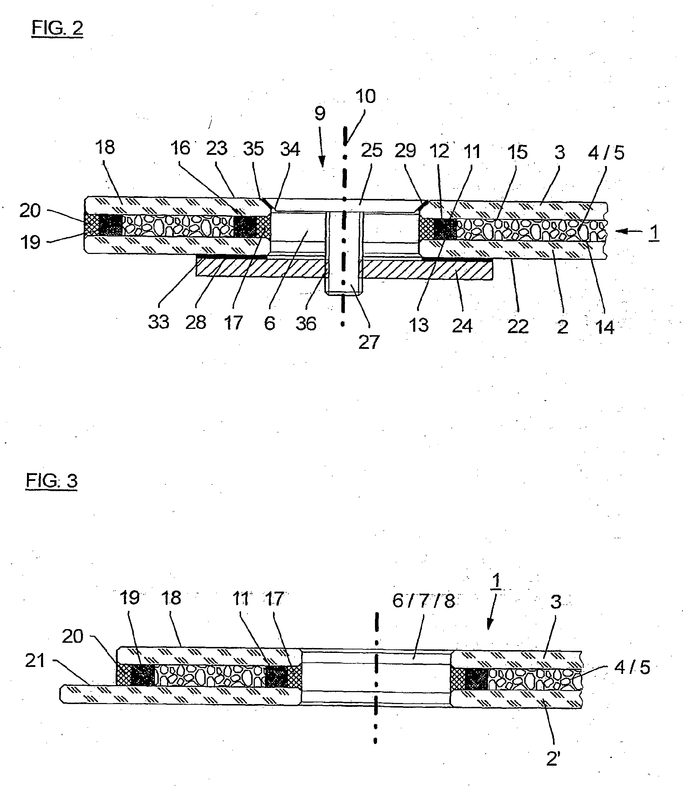

Fig. 1 zeigt ein erfindungsgemässes Brandschutzverbundglas 1, welches als Bauelement, bzw. als rahmenloses Türblatt ausgebildet ist. Wie aus Fig. 2 ersichtlich ist, besteht das Brandschutzverbundglas 1 aus zwei Glasscheiben 2, 3, welche mit Abstand zueinander angeordnet sind und im Randbereich 18 über einen Abstandhalter 19 miteinander verbunden sind. Zwischen den beiden Glasscheiben 2, 3 ist ein Zwischenraum 4 ausgebildet, welcher mit einer Brandschutzschicht 5 ausgefüllt ist. Dabei handelt es sich um eine bekannte Brandschutzschicht 5, z.B. gemäss EP-B 620 781, welche im Brandfall trübe wird und aufschäumt. Das Brandschutzverbundglas 1, bzw. Türblatt weist Durchbrüche 6, 7, 8 auf, welche sowohl die beiden Glasscheiben 2, 3 wie auch die Brandschutzschicht 5 durchdringen. Diese Durchbrüche 6, 7, 8 dienen dazu, Verbindungselemente 9 für Anbauelemente, insbesondere Beschläge, Halterungen oder Schlosskasten aufzunehmen. Beim dargestellten Türblatt dienen die beiden Durchbrüche 6 dazu, Anbauelemente in der Form von Scharnierbändern 26 aufzunehmen. Die beiden Durchbrüche 7 sind vorgesehen, um Anbauelemente eines nicht dargestellten Türschliessers aufzunehmen und die Durchbrüche 8 sind vorgesehen, um Anbauelemente in der Form eines nicht dargestellten Schlosskastens oder eines Schlosses, bzw. Türdrückers am Brandschutzverbundglas 1, bzw. Türblatt anbringen zu können. Das Brandschutzverbundglas 1 kann auch ein Bauelement für Wände, Fenster oder Fassadenplatten sein, wobei dann die Durchbrüche 6, 7, 8 entsprechend ausgebildet sind, um geeignete Halterungen oder Verbindungselemente zu den benachbarten Bauelementen aufzunehmen.

Fig. 2 zeigt einen Teilquerschnitt entlang der Linie A-A in Fig. 1. Das Brandschutzglas 1 besteht aus den beiden Glasscheiben 2, 3, welche mittels des Abstandhalters 19 mit Abstand zueinander angeordnet sind und den Zwischenraum 4 bilden, welcher durch die Brandschutzschicht 5 ausgefüllt ist. Der Abstandhalter 19 besteht aus einem Butyl-Polymer, dessen Zusammensetzung und Anbringen beispielsweise gemäss EP-B 1 179 113 bekannt ist. Es können aber auch andere geeignete Materialien eingesetzt werden. Zusätzlich zum Abstandhalter 19 ist entlang des Randbereiches 18 des Brandschutzverbundglases eine Randabdichtung 20 angeordnet, wobei im dargestellten Beispiel als Material Polysulfid verwendet wird. Der Durchbruch 6 verläuft rechtwinklig zur Fläche des Brandschutzverbundglases 1 und weist eine Längsachse 10 auf. Im Zwischenraum 4 zwischen den beiden Glasscheiben 2, 3 ist um den Durchbruch 6 eine Hülse 11 angeordnet. Diese Hülse 11 besteht aus einem chemisch inerten Material, welches mit dem Material der Brandschutzschicht 5 nicht reagiert und genügend druckfest ist. Besonders geeignet sind Glas, Keramik oder Kunststoffe, z.B. Polypropylen. Die beiden Stirnflächen 12, 13 der Hülse 11 liegen an den Innenflächen 14, 15 der beiden Glasscheiben 2, 3 an. Dabei weist mindestens eine der beiden Stirnflächen 12, 13 der Hülse 11 eine Klebstoffschicht auf, mittels welcher die Hülse 11 vor dem Zusammenbau des Brandschutzverbundglases 1 auf einer der beiden Glasscheiben 2, 3 angebracht und positioniert wird. Es kann auch zweckmässig sein, an beiden Stirnflächen 12, 13 der Hülse 11 Klebstoffschichten anzubringen und dabei ein Material zu wählen, welches gleichzeitig als Dichtungsmasse wirkt.

Die Hülse 11 weist einen Innendurchmesser auf, welcher grösser ist als der Innendurchmesser des Durchbruches 6 in den beiden Glasscheiben 2, 3. Dadurch wird entlang des Innenmantels 16 der Hülse 11 zwischen den beiden Glasscheiben 2, 3 ein Ringraum gebildet, welcher mit einer Dichtungsmasse ausgefüllt wird und dadurch eine Dichtung 17 gebildet wird. Als Dichtungsmasse können bekannte geeignete Materialien verwendet werden, wobei im dargestellten Beispiel Polysulfid verwendet wird oder eine zweistufige Dichtung aus einer Kombination mit anderen Materialien eingebracht wird. Diese Ausgestaltung gewährleistet, dass die Brandschutzschicht 5 keinen Umwelteinflüssen, beispielsweise Kontakt mit der Umgebungsluft, ausgesetzt wird.

Als Verbindungselemente 9 für die Anbauelemente, im dargestellten Beispiel gemäss Fig. 1 ein Scharnierband 26, sind Spannplatten 24, 25 vorhanden und beidseits an den Aussenflächen 22, 23 des Brandschutzverbundglases 1 angeordnet. Diese Spannplatten 24, 25 sind über einen Gewindebolzen 27 miteinander verbunden und gegeneinander gespannt. Die Spannplatte 25 wird im dargestellten Beispiel durch eine Scheibe mit einer konischen Mantelfläche 34 gebildet. Als Gegenstück ist an der Glassscheibe 3 um den Durchbruch 6 eine konische Ansenkung 35 angebracht. Diese Ausgestaltung ermöglicht eine flächenbündige Ausbildung des Verbindungselementes 9. Die Spannplatte 25 kann aber auch anders ausgebildet sein, beispielsweise gleichartig wie die Gegenplatte 24. Im Zentrum der Spannplatte 25 befindet sich der Gewindebolzen 27, welcher sich in Richtung der Längsachse 10 erstreckt. Die gegenüberliegende Spannplatte 24 weist eine Bohrung oder Gewindebohrung 36 auf, welche die Verbindung zum Gewindebolzen 27 bildet. Am überstehenden Teil des Gewindebolzens 27 und/oder an der Spannplatte 24 können in bekannter Weise Anbauelemente, z.B. das Scharnierband 26 befestigt werden. Zwischen den Aussenflächen 22, 23 des Brandschutzverbundglases 1 und den gegen das Glas gerichteten Flächen 33, 34 der beiden Spannplatten 24, 25 ist je eine Zwischenschicht 28, 29 eingelegt. Diese Zwischenschicht 28, 29 besteht aus einem brandschutztechnisch geeigneten Material, welches auch im Brandfall erst nach einer vorgegebenen Brandschutzzeit zerstört wird. Im dargestellten Beispiel wird für die Zwischenschicht 29 ein Ring aus Polyoxymethylen (POM) eingesetzt und für die Zwischenschicht 28 ein Ring aus keramischen Fasern verwendet. Die Zwischenschichten 28, 29 dienen einerseits dazu, im Brandfall den Wärmeübergang von den Spannplatten 24 bzw. 25 auf das Brandschutzverbundglas 1 zu reduzieren und anderseits den Anpressdruck der Spannplatten 24, 25 gleichmässig auf die Aussenflächen 22, 23 bzw. im gezeigten Beispiel auf die konische Ansenkung 35 des Brandschutzverbundglases 1 zu verteilen. Durch die Spannverbindung über den Gewindebolzen 27 wird zwischen den Kontaktflächen ein Kraftschluss aufgebaut, über welchen allfällige Kräfte vom Brandschutzverbundglas 1 auf die Anbauelemente, im dargestellten Beispiel gemäss Fig. 1 auf das Scharnierband 26, oder umgekehrt übertragen werden. Die Druckkräfte, welche im Bereiche der Durchbrüche 6 entstehen, werden dabei über die Hülse 11 übertragen und von dieser aufgenommen. Dies gewährleistet, dass die Brandschutzschicht 5 im Bereiche des Durchbruches 6 keinen Druckkräften ausgesetzt wird und nicht beschädigt werden kann.

Andere Anbauelemente wie beispielsweise ein Schlosskasten können dabei direkt eine der beiden Spannplatten 24, 25 bilden oder die Spannplatten 24, 25 weisen Durchbrüche auf, in welche entsprechende Bauelemente wie Zylinderschlösser und dergleichen eingebaut werden können. Die Spannplatten 24, 25 können in bekannter Weise an Stelle des Scharnierbandes 26 mit anderen bekannten Anbauelementen verbunden sein, wie beispielsweise so genannte Punkthalterungen für grossflächige Glaswände, welche aus mehreren Brandschutzverbundgläsern 1 zusammengefügt werden.

Für die Glasscheiben 2, 3 kann Floatglas oder Gussglas oder gehärtetes Glas, insbesondere thermisch vorgespanntes Glas oder laminiertes oder beschichtetes Glas verwendet werden. Die Wahl des Glases ist dabei wesentlich von den Einsatzbedingungen und der gewünschten Brandschutzsicherheit abhängig. Zweckmässigerweise wird für mindestens eine der beiden Glasscheiben 2, 3 thermisch vorgespanntes Glas verwendet. Im dargestellten Beispiel sind beide Glasscheiben 2, 3 aus gehärtetem, bzw. thermisch vorgespanntem Glas.

Fig. 3 zeigt ein Brandschutzverbundglas, bei welchem die Glasscheibe 2' mindestens in einer Richtung eine grössere Flächenausdehnung aufweist als die Glasscheibe 3. Im Übrigen ist das Brandschutzverbundglas 1 gleich aufgebaut wie zu Fig. 2 beschrieben und weist ebenfalls Durchbrüche 6, 7, 8 und Hülsen 11 auf. Durch die grössere Abmessung der Glasscheibe 2' entsteht im Randbereich 18 ein Randvorsprung 21, bzw. ein Glasüberstand. Für die Glasscheibe 2' wird in diesem Fall ein gehärtetes, bzw. thermisch vorgespanntes Glas gewählt. Diese Ausführungsform des Brandschutzverbundglases 1 ist geeignet für Anwendungsfälle, bei welchen mehrere Brandschutzverbundgläser 1 stirnseitig aneinander stossen und die Dichtungen an den Stirnseiten verdeckt werden sollen. Es ist aber auch möglich, zusätzliche Rahmenelemente hinter dem Randvorsprung 21 anzuordnen, wodurch diese im Brandfall besser geschützt werden. Dies ist auch dann vorteilhaft, wenn weitere Bauelemente gebildet werden und zusätzlich zum Brandschutzverbundglas 1 und davon beabstandet noch zusätzliche Glasscheiben angeordnet werden.

## Patentansprüche

1. **Brandschutzverbundglas** (1) für Bauelemente wie Türen, Wände oder Fenster mit
mindestens zwei voneinander beabstandeten Glasscheiben (2, 3) und
einer im Zwischenraum (4) zwischen den Glasscheiben (2, 3) angeordneten Brandschutzschicht (5), wobei, dass
das Brandschutzverglasungsverbundglas Durchbrüche (6, 7, 8) für Verbindungselemente (9) zu Anbauelementen, insbesondere Beschläge, Halterungen oder Schlosskasten aufweist,
im Bereiche eines Verbindungselementes (9) mindestens ein Durchbruch (6, 7, 8) die beiden Glasscheiben (2, 3) und die Brandschutzschicht (5) durchdringt, wobei die Längsachse (10) dieses Durchbruches (6, 7, 8) quer zur Fläche der Glasscheiben (2, 3) steht,
im Zwischenraum (4) zwischen den Glasscheiben (2, 3) eine Hülse (11) eingebaut ist,
welche den Durchbruch (6,7,8) mantelförmig umschliesst,
die Stirnflächen (12, 13) der Hülse (11), welche rechtwinklig zur Längsachse (10) des Durchbruchs (6,7,8) stehen an den Innenflächen (14, 15) der beiden Glasscheiben (2, 3) anliegen und dass
die Brandschutzschicht (5) durch die Hülse (11) vom Durchbruch (6, 7, 8) getrennt ist, wobei
im Bereiche des Durchbruches (6, 7, 8) an den Aussenflächen (22, 23) des Brandschutzverbundglases (1) Spannplatten (24, 25) angeordnet sind, welche Verbindungselemente (9) für Anbauelemente (26) bilden, diese Spannplatten (24, 25) über Spannverbindungen (27), welche sich durch den Durchbruch (6, 7, 8) erstrecken, miteinander verbunden sind, **dadurch gekennzeichnet, dass** zwischen den beiden Spannplatten (24, 25) und den Aussenflächen (22, 23) des Brandschutzverbundglases (1) je eine Zwischenschicht (28, 29) aus einem brandschutztechnisch geeigneten Material angeordnet ist, und dass die Brandschutzschicht eine im Brandfall trübende Brandschutzschicht ist.

2. Brandschutzverbundglas (1) nach Patentanspruch 1, **dadurch gekennzeichnet, dass** quer zur Längsachse (10) des Durchbruches (6,7,8) die Innenabmessungen der Hülse (11) grösser sind als die Innenabmessungen des Durchbruches (6, 7, B) in den Glasscheiben (2, 3).

3. Brandschutzverbundglas (1) nach Patentanspruch 1 oder 2, **dadurch gekennzeichnet, dass** entlang des Innenmantels (16) der Hülse (11) und zwischen den beiden Glasscheiben (2, 3) eine Dichtungsmasse angeordnet ist, welche eine mantelförmige Dichtung (17) bildet.

4. Brandschutzverbundglas (1) nach einem der Patentansprüche 1 bis 3, **dadurch gekennzeichnet, dass** mindestens zwischen der Innenfläche (14, 15) einer der Glasscheiben (2, 3) und der an dieser Innenfläche (14, 15) anliegenden Stirnfläche (12, 13) der Hülse (11) ein Klebstoff angebracht ist.

5. Brandschutzverbundglas (1) nach einem der Patentansprüche 1 bis 4, **dadurch gekennzeichnet, dass** der Querschnitt des Durchbruches (6, 7, 8), quer zur Längsachse (10), kreisringförmig, oval oder mehreckig ist.

6. Brandschutzverbundglas (1) nach einem der Patentansprüche 1 bis 5, **dadurch gekennzeichnet, dass** die beiden Glasscheiben (2, 3) im Randbereich (18) über einen rahmenförmigen, zwischen den Glasscheiben (2, 3) angeordneten Abstandhalter (19) aus einer Klebermasse aus einem ButylPolymer miteinander verbunden sind.

7. Brandschutzverbundglas (1) nach einem der Patentansprüche 1 bis 6, **dadurch gekennzeichnet, dass** eine der Glasscheiben (2') mindestens in einer Richtung der Fläche grössere Abmessungen als die andere Glasscheibe (3) aufweist und durch dieses Übermass am Brandschutzverbundglas (1) ein Randvorsprung (21) ausgebildet ist.

8. Brandschutzverbundglas (1) nach einem der Patentansprüche 1 bis 7, **dadurch gekennzeichnet, dass** mindestens eine der Glasscheiben (2, 3) gehärtet ist.

9. Verfahren zur Herstellung eines Brandschutzverbundglases (1) gemäss Patentanspruch I, **dadurch gekennzeichnet, dass** an den Glasscheiben (2, 3), welche Teile des Brandschutzverbundglases bilden, die Durchbrüche (6, 10 7,8) angebracht werden, auf eine erste Glasscheibe (2 oder 3) im Randbereich (18) der rahmenförmigen Abstandhalter (19) aufgebracht wird, und im Bereiche der und um die Durchbrüche (6, 7, 8) dieser Glasscheibe (2 oder 3) die Hülsen (11) angeordnet werden, eine zweite Glasscheibe (2 oder 3) auf die erste Glasscheibe gelegt und mit dieser zur gewünschten Dicke zusammengefügt wird und anschliessend der Zwischenraum (4) zwischen den beiden Glasscheiben mit einer Masse, welche die Brandschutzschicht (5) bildet gefüllt wird.

10. Verfahren nach Patentanspruch 9, **dadurch gekennzeichnet, dass** vor oder nach dem Einfüllen der Masse, welche die Brandschutzschicht (5) bildet, in die Durchbrüche (6, 7, 8) und entlang des Innenmantels (16) der Hülsen (11) eine Dichtungsmasse (17) eingebracht wird.

## Claims

1. A fire-protection composite glass (1) for components such as doors, walls or windows with
at least two glass panes (2, 3) which are distanced to one another and
with a fire-protection layer (5) which is arranged in the intermediate space (4) between the glass panes (2, 3), wherein
the fire-protection glazing composite glass comprises through-holes (6, 7, 8) for connection elements (9) to attachment elements, in particular fittings, holders or lock cases,
at least one through-hole (6, 7) penetrates the two glass panes (2, 3) and the fire-protection layer (5), in the region of a connection element (9),
wherein the longitudinal axis (10) of this through-hole (6, 7, 8) is transverse to the surface of the glass panes (2, 3),
a sleeve (11) is installed in the intermediate space (4) between the glass panes (2, 4),
said sleeve encompassing the through-hole (6, 7, 8) in a jacket-like manner,
the end-faces (12, 13) of the sleeve (11) which are at right angles to the longitudinal axis (10) of the through-hole (6, 7, 8) bear on the inner surfaces (14, 15) of the two glass panes (2, 3) and that
the fire-protection layer (5) is separated from the through-hole (6, 7, 8) by the sleeve (11), wherein
clamping plates (24, 25) which form connection elements (9) for attachment elements (26) are arranged in the region of the through-hole (6, 7, 8), on the outer surfaces (22, 23) of the fire-protection composite glass (1) and these clamping plates (24, 25) are connected to one another via clamping connections (27) which extend through the through-hole (6, 7, 8),
**characterised in that**
an intermediate layer (28, 29) of a material which is suitable with regard to fire-protection technology is arranged in each case between the two clamping plates (24, 25) and the outer surfaces (22, 23) of the fire-protection composite glass (1), and that the fire-protection layer is a fire-protection layer which becomes opaque in the case of a fire.

2. A fire-protection composite glass (1) according to patent claim 1, **characterised in that** the inner dimensions of the sleeve (11) transverse to the longitudinal axis (10) of the through-hole (6, 7, 8) are larger than the inner dimensions of the through-hole (6, 7, 8) in the glass panes (2, 3).

3. A fire-protection composite glass (1) according to patent claim 1 or 2, **characterised in that** a sealing mass which forms the jacket-like seal (17) is arranged along an inner jacket (16) of the sleeve (11) and between the two glass panes (2, 3).

4. A fire-protection composite glass (1) according to one of the patent claims 1 to 3, **characterised in that** an adhesive is applied at least between the inner surface (14, 15) of one of the glass panes (2, 3) and the end-face (12, 13) of the sleeve (11) which bears on this inner surface (14, 15).

5. A fire-protection composite glass (1) according to one of the patent claims 1 to 4, **characterised in that** the cross section of the through-hole (6, 7, 8), transversely to the longitudinal axis (10) is annulus-shaped, oval or polygonal.

6. A fire-protection composite glass (1) according to one of the patent claims 1 to 5, **characterised in that** the two glass panes (2, 3) in the edge region (18) are connected to one another via a frame-like spacer (19) of an adhesive mass of a butyl polymer, said spacer being arranged between the glass panes (2, 3).

7. A fire-protection composite glass (1) according to one of the patent claims 1 to 6, **characterised in that** one of the glass panes (2') at least in a direction of the surface has larger dimensions than the other glass pane (3), and an edge projection (21) is formed on the fire-protection composite glass (1) by way of this over-dimensioning.

8. A fire-protection composite glass (1) according to one of the claims 1 to 7, **characterised in that** at least one of the glass panes (2, 3) is hardened.

9. A method for manufacturing a fire-protection comprise glass (1) according to claim 1, **characterised in that** the through-holes (6, 7, 8) are incorporated on the glass panes (2, 3) which form part of the fire-protection composite glass, the frame-like spacer (19) is deposited onto the first glass pane (2 or 3) in the edge region (18), and the sleeves (11) are arranged in the region of and in the region around the through-holes (6, 7, 8) of this glass pane (2 or 3), a second glass pane (2 or 3) is laid onto the first glass pane and is joined together with this into the desired thickness and the intermediate space (4) between the two glass panes is subsequently filled with a mass forming the fire-protection layer (5).

10. A method according to patent claim 9, **characterised in that** a sealing mass (17) is brought into the through-holes (6, 7, 8) and along the inner jacket (16) of the sleeves (11), before or after the filling of the mass forming the fire-protection layer (5).

## Revendications

1. Verre de sécurité feuilleté anti-feu (1) pour éléments de construction, par exemple des portes, des murs ou des fenêtres, présentant
au moins deux feuilles de verre (2, 3) maintenues à distance l'une de l'autre et
une couche (5) de protection contre le feu disposée dans l'espace intermédiaire (4) situé entre les feuilles de verre (2, 3),
le verre de sécurité feuilleté anti-feu présentant des perforations (6, 7, 8) pour des éléments de liaison (9) aux éléments de construction, en particulier des ferrures, des supports ou des logements de serrures,
au moins une perforation (6, 7, 8) traversant les deux feuilles de verre (2, 3) et la couche (5) de protection contre le feu au niveau d'un élément de liaison (9),
l'axe longitudinal (10) de cette perforation (6, 7, 8) étant transversal par rapport à la surface des feuilles de verre (2, 3),
une douille (11) étant incorporée dans l'espace intérieur (4) situé entre les feuilles de verre (2, 3) et
entourant en forme d'enveloppe la perforation (6, 7, 8),
les surfaces frontales (12, 13) de la douille (11) qui sont perpendiculaires à l'axe longitudinal (10) de la perforation (6, 7, 8) reposant contre les surfaces intérieures (14, 15) des deux feuilles de verre (2, 3) et
la couche (5) de protection contre le feu étant séparée de la perforation (6, 7, 8) par la douille (11),
des plaques de serrage (24, 25) qui forment des éléments de liaison (9) pour des éléments de construction (26) étant disposées au niveau de la perforation (6, 7, 8), sur les surfaces extérieures (22, 23) du verre de sécurité feuilleté anti-feu (1), ces plaques de serrage (24, 25) étant reliées l'une à l'autre par des liaisons serrées (27) qui s'étendent dans la perforation (6, 7, 8),
**caractérisé en ce que**
une couche intermédiaire (28, 29) en un matériau convenant techniquement pour la protection contre le feu est disposée entre chacune des deux plaques de serrage (24, 25) et des surfaces extérieures respectives (22, 23) du verre de sécurité feuilleté anti-feu (1) et
**en ce que** la couche de protection contre le feu est une couche de protection contre le feu qui devient opaque en cas d'incendie.

2. Verre de sécurité feuilleté anti-feu (1) selon la revendication 1, **caractérisé en ce que** dans la direction transversale à l'axe longitudinal (10) de la perforation (6, 7, 8), les dimensions intérieures de la douille (11) sont plus grandes que les dimensions intérieures de la perforation (6, 7, 8) formée dans les feuilles de verre (2, 3).

3. Verre de sécurité feuilleté anti-feu (1) selon les revendications 1 ou 2, **caractérisé en ce qu'**une pâte d'étanchéité qui forme un joint d'étanchéité (17) en forme d'enveloppe est disposée le long de l'enveloppe intérieure (16) de la douille (11) et entre les deux feuilles de verre (2, 3).

4. Verre de sécurité feuilleté anti-feu (1) selon l'une des revendications 1 à 3, **caractérisé en ce qu'**au moins entre la surface intérieure (14, 15) de l'une des feuilles de verre (2, 3) et la surface frontale (12, 13) de la douille (11) qui repose contre cette surface intérieure (14, 15), un adhésif est appliqué.

5. Verre de sécurité feuilleté anti-feu (1) selon l'une des revendications 1 à 4, **caractérisé en ce que** la section transversale de la perforation (6, 7, 8) a la forme d'un anneau circulaire, d'un ovale ou d'un polygone transversalement par rapport à l'axe longitudinal (10).

6. Verre de sécurité feuilleté anti-feu (1) selon l'une des revendications 1 à 5, **caractérisé en ce que** sur la bordure (18), les deux feuilles de verre (2, 3) sont reliées l'une à l'autre par un écarteur (19) en forme de cadre disposé entre les feuilles de verre (2, 3), en pâte adhésive à base de polymère de butyle.

7. Verre de sécurité feuilleté anti-feu (1) selon l'une des revendications 1 à 6, **caractérisé en ce qu'**au moins dans une direction de la surface, l'une des feuilles de verre (2') présente des dimensions plus grandes que l'autre feuille de verre (3) et **en ce qu'**une saillie de bordure (21) est formée sur le verre de sécurité feuilleté anti-feu (1) du fait de cette plus grande dimension.

8. Verre de sécurité feuilleté anti-feu (1) selon l'une des revendications 1 à 7, **caractérisé en ce qu'**au moins l'une des feuilles de verre (2, 3) est durcie.

9. Procédé de fabrication d'un verre de sécurité feuilleté anti-feu (1) selon la revendication 1, **caractérisé en ce que** les perforations (6, 10, 7, 8) sont formées sur les feuilles de verre (2, 3) qui forment des parties du verre de sécurité feuilleté anti-feu, l'écarteur (19) en forme de cadre est appliqué sur une première feuille de verre (2, 3) dans la bordure (18) et **en ce que** les douilles (11) sont placées dans et autour des perforations (6, 7, 8) de cette feuille de verre (2, 3), une deuxième feuille de verre (2, 3) est placée sur la première feuille de verre et est assemblée avec cette dernière pour obtenir l'épaisseur souhaitée, l'espace intermédiaire entre les deux feuilles de verre est ensuite rempli d'une pâte qui forme la couche (5) de protection contre le feu.

10. Procédé selon la revendication 9, **caractérisé en ce qu'**avant ou après l'introduction de la pâte qui forme la couche (5) de protection anti-feu, une pâte d'étanchéité (17) est placée dans les perforations (6, 7, 8) et le long de l'enveloppe intérieure (16) des douilles (11).
